# EUROPEAN PATENT APPLICATION

(11) **EP 0 964 587 A2**
(43) Date of publication of application: **15.12.1999**
(21) Application number: 99401209.4
(22) Date of filing: 20.05.1999
(51) Int. Cl.: H04Q 3/00

(54) **Method for controlling access to areas in communications network systems**

(30) Priority: 12.06.1998 ES 9801247
(71) Applicant: ALCATEL, 75008 Paris (FR)
(72) Inventor: Huelamo Platas, José Javier, 28045 Madrid (ES); Gomez Mateo, Daniel, 28047 Madrid (ES)
(74) Representative: Feray, Valérie

(57) **Abstract**

Method for controlling access to areas in communications networks comprising the steps of:
- dividing each network into access areas (AA) to which terminals are connected;
- opening an access session in at least one terminal (T);
- obtaining from said terminal (T), access area data (AAD) for the area in which the terminal (T) is connected;
- establishing a user context associated with said access session and based on said data, containing information on terminal identity and terminal type;
- checking the subscription of said terminal, using said user context for opening a service session or for participating in a previously opened service session; and
- admitting or rejecting a request for opening a service session or for participating in a previously opened service session in said terminal.

## Description

The present invention relates to a method for controlling access to areas in a communications network system.

More specifically, the invention is implemented in a Telecommunications Information Networking Architecture, known as TINA, which is a distributed software architecture for telecommunications defined by an international consortium known as the TINA Consortium.

A communications network according to the TINA architecture includes retailer domains, consumer domains and connectivity provider domains. The present invention proposes a method for checking and controlling the connection of terminals to the network, controlled and managed by connectivity providers, for receiving the services offered by retailer domains.

### BACKGROUND OF THE INVENTION

TINA does not provide any method for checking whether the terminals are connected to the networks, controlled and managed by the connectivity providers, or whether they are suitable and accessible for the services that are being offered to them by the retailer.

Consequently, it can occur that when a user requests a service from a retailer, said service cannot be provided either because the terminal is connected to a network which is not the appropriate one for said service, or because it is connected to a network controlled and managed by a connectivity supplier that lacks direct or indirect interaction (through a federation of connectivity providers) with the corresponding retailer domain in which the service was requested. This makes it necessary to carry out a series of interactions with the retailer that could be avoided if the necessary checking had been done beforehand.

At present, in TINA, the retailer domain assumes that the terminals are connected to networks directly or indirectly associated with the retailer through the corresponding connectivity providers and, consequently, the request for a directly associated connectivity provider always takes place, even when the terminal is on an inaccessible or unsuitable network, for which reason, at the end, the connection is not achieved despite having used unnecessarily the resources of the connectivity provider domain.

As a result it is necessary to have available a method for checking the connection and the accessibility and compatibility of the terminal for receiving the services provided by the retailer.

### SUMMARY OF THE INVENTION

To overcome the drawbacks mentioned above, the method object of the present invention, for controlling access to areas in a communications network is proposed, according to which, networks can be divided into one or a plurality of areas in which the terminals are connected. The terminals can be connected to one or to several access areas.

The access areas are characterised by means of access area data that contain information relative to one or more identifiers of the connectivity provider and of the network types provided by said connectivity providers to which the terminal is connected. Said data must be held in the terminal. In a fixed terminal, the data mentioned are inserted at terminal initialisation. The terminal initialisation is a process that comprises the creation of components necessary in the terminal by providing the necessary terminal configuration values.

In a mobile terminal, said data shall be included, either by the user or else automatically by the terminal, when the latter accesses to a new access area of the network.

The method for controlling access to areas in a communications system, according to the present invention is thus characterised in comprising the steps of:
- dividing each network into access areas (AA) to which terminals are connected, each access area (AA) being represented by data of the access area (AAD) to which each terminal (T) is connected;
- opening an access session in at least one terminal (T);
- obtaining from said terminal (T) said data of the access area (AAD) to which the terminal (T) is connected through a provider agent (PA) software component;
- supplying said access area data (AAD) obtained to a user agent (UA) software component where a user context associated with said access session is established and which contains information relative to terminal identity and terminal type;
- checking the subscription of said terminal, using said user context in a subscription management subsystem (SMS) for opening a service session or for participating in a previously opened service session; and
- admitting or rejecting a request for opening a service session or for participating in a previously opened service session in said terminal according to the result of the checking made in the preceding step.

This and further embodiments of the invention are described in more detail hereinbelow as well as in the claims.

### BRIEF DESCRIPTION OF THE DRAWINGS

Figure 1 corresponds to a representation of the information model related to the access area concept in a communications network.

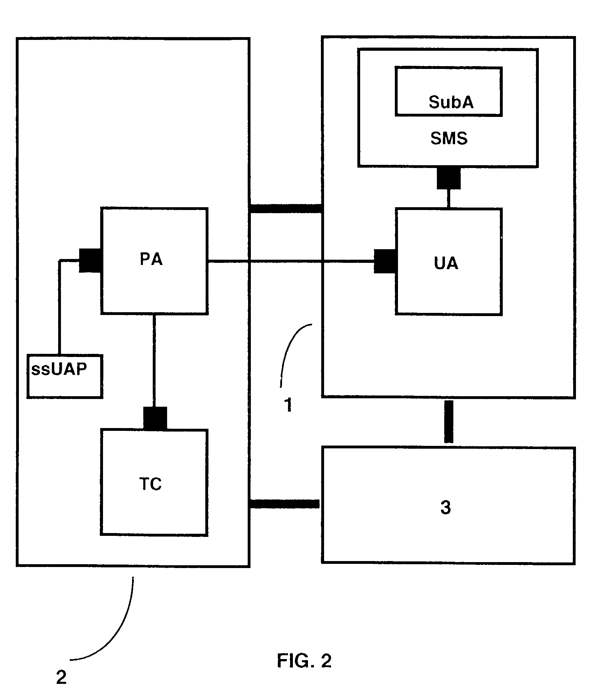

Figure 2 is a schematic diagram showing the software components that intervene in the implementation of the method of the invention.

### DESCRIPTION OF THE PREFERRED EMBODIMENT

The TINA communication network system, over which is laid the TINA software architecture and where the method for controlling access to areas in a communications network as is proposed in the present invention is implemented, is formed by one or several networks, each network being divided into retailer, consumer and connectivity provider domains. Furthermore, each network includes a set of switches, for example ATM switches, controlled through interfaces open to TINA connection management components.

These components, together with the remaining components forming the TINA architecture, are placed in the TINA user terminals such as personal computers or workstations, and on the nodes, which are normally also workstations, that control the network switches.

The TINA components are lodged on a Distributed Processing Environment (DPE), based on the known CORBA architecture (Common Object Request Broker Architecture), which permits said nodes and terminals to have different software/hardware technologies or manufacturers. These nodes and terminals having a DPE core are interconnected with each other forming what is called the transport network for the DPE cores or Kernel Transport Network (KTN). The connections for streamed data, such as video or audio signals, are controlled by means of the TINA connection management components that operate on the switches that make up the transport network. The KTN network can be an independent network or it can be a network that makes use of connections in the transport network.

The type of connection between DPE cores achieved by means of the Kernel Transport Network (KTN) must be always present in every terminal, for which reason the access area data refer only to the transport network that supports the connectivity required for the services offered by the retailer or by the indirect services provider.

Each retailer domain (1) incorporates, inter alia, the following software components, of the TINA standard type:
- user agent (UA), which represents the end user or subscriber when participating in service sessions; and
- subscription agent (SubA), which has the task of controlling the subscriptions available for a user or a terminal.

In turn, each consumer domain (2) incorporates the following software components:
- provider agent (PA), which represents the provider of the services supported in the terminal; and
- service session user application (ssUAP), which as its name indicates, represents the user application and is located in the consumer domain.

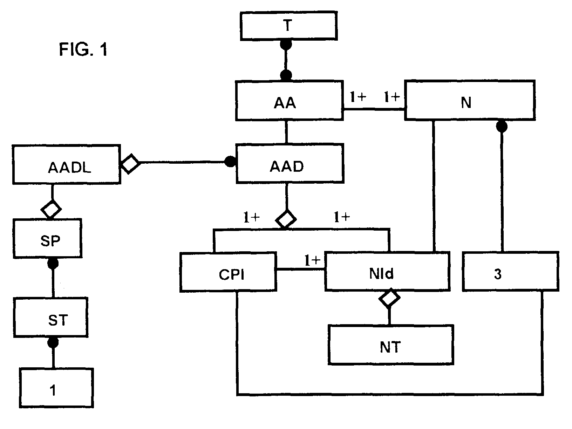

The representation of an information model for the concept of access areas related to other TINA information objects can be seen in figure 1 wherein a notation in conformity with the Object Modelling Technique (OMT), normally employed in TINA, is employed.

A terminal (T) can be connected to one or several networks of the same or different network technology, for example ATM (Asynchronous Transfer Mode) or IP (Internet Protocol). These networks can be controlled by one or more connectivity providers (3). The concept of access areas represents an area of one or several networks to which the terminal is connected and also contains information on the corresponding connectivity providers (3). The access area data (AAD) contain information on the network type (NT) utilised, to which the terminal has been connected, and the corresponding connectivity provider identifiers (CPI). Each network (N) is identified by a network identifier (Nld), which contains the network type (NT).

The access area concept is applicable to both fixed and mobile terminals. The fixed terminal establishes the access area at terminal initialisation, and the mobile terminal updates the access area in the terminal each time the terminal is registered in the network, in the retailer domain (1), in order to indicate that the terminal has been connected to the network. The mobile terminal, consequently, indicates the access area to which the terminal is connected. Said access area is checked subsequently by a subscription management subsystem (SMS) in the following manner:
- When a mobile terminal is registered in the network, that is, in a retailer domain (1), the service profile (SP) of the terminal mobility contains a list of the data of access areas permitted or available for the mobile terminal. In this case, the terminal passes the access area data to the retailer domain (1) for checking in the subscription management subsystem (SMS), via a subscription agent, that the area in which the terminal is connected is an area permitted for terminal mobility.
- Each time a service session is established with a mobile terminal, the corresponding service profiles (SP) contain the access areas data list required for said service. In this case, the provider agent (PA) obtains the access area data by invoking an operation relative to the terminal configuration in a software component termed terminal controller (TC), which is incorporated in the terminal. The provider agent (PA) passes these data to the user agent (UA) for establishing the user context in an access session. The user context holds information relative to terminal identity, terminal type and mobility type, among other items of information that may be of interest depending on the requirements of each application.

The terminal controller (TC) is a software component that is located in the consumer domain and contains information concerning the terminal configuration, which includes, among other items, terminal identity, terminal type, mobility type, network address and data of the access areas in which the fixed or mobile terminal has been connected or registered.

The terminal controller (TC) has certain functionalities that are common for both fixed and mobile terminals, including some specific functionality about mobility type.

The main functionalities common to all types of terminal mobility are the functions related to the handling of the terminal configuration.

The terminal configuration is obtained from the terminal controller (TC) by invoking the corresponding operation by the provider agent (PA).

The data of the terminal configuration, which are transferred in said operation, are: terminal identity, terminal type, mobility type and access area data.

The access area obtained is then passed from the provider agent (PA) to another software component termed user agent (UA) in a user context set up operation performed in the latter. In the user agent (UA) it will be necessary to employ this access area when checking the service subscription by interacting with the subscription management through the subscription agent (SubA).

In figure 1, the expression 1+ means an association or relation with one or more entities. Thus, it can be seen that the access area (AA) can be associated with one or several networks (N); a network can be associated with one or several access areas; a terminal (T) can be connected to none, one or several access areas belonging to one or several networks (N) of one or several connectivity providers (3).

When an access session is opened in a terminal, the provider agent (PA) obtains from the terminal data of the access area (AAD) to which the terminal is connected and provides said data to the user agent (UA) while the latter sets up the user context associated with said access session by employing the corresponding operation. From this moment, the user agent (UA) knows the access area to which the terminal is connected in said access session.

When the user requests the opening of a service session or is invited to participate in a service session through the corresponding user agent (UA), as is presently defined in TINA, the user agent (UA) on checking the subscription to said service, transfers to subscription management, by means of the subscription agent (SubA), the data corresponding to the access area to which the terminal is connected, for checking that it is a permitted or suitable area for the service requested.

The service profiles (SP) corresponding to the service templates (ST) of the services that a retailer (1) offers, supported with the subscription management, shall have to contain an access areas data list (AADL) necessary for said service, and if the data of the access areas to which the terminal is connected are not in compliance with the data contained in said list, the setting up of the service session or the participation in an already established session shall be rejected, with indication of the reason therefor.

In the case of mobile terminals, when the terminal is registered in the network in the retailer domain (1), it transfers to the network the access area data (AAD) corresponding to the access area (AA) to which the terminal is connected. Before accepting registration, the network shall have to check subscription to the terminal mobility service and whether the data of the access area to which it is connected are permitted data.

In this data subscription checking process in the subscription management, through the subscription agent (SubA), the access area data (AAD) are also transferred, and if these access area data are not in compliance with the data in the access areas data list (AADL) permitted for this service in the service profile (SP) for terminal mobility, then the terminal registration shall be rejected, with indication of the reason therefor.

Finally it is to be noted that the method of the present invention is intended to be used as a computer program comprising computer program code means. Therefore the present invention also relates to said computer program as well as a computer readable medium having said program recorded thereon, and comprising said computer program code means adapted to perform all the steps of the method of the invention when said program is run on a computer.

## Claims

1. Method for controlling access to areas in a communications system, said system comprising at least one communications network which comprises at least one retailer domain (1) which has interaction with at least one connectivity provider domain (3), and a plurality of terminals (T) which are capable of opening access sessions or service sessions, or participating in previously opened service sessions, characterised in that it comprises the steps of:
- dividing each network into access areas (AA) to which terminals are connected, each access area (AA) being represented by data of the access area (AAD) to which each terminal (T) is connected;
- opening an access session in at least one terminal (T);
- obtaining from said terminal (T) said data of the access area (AAD) to which the terminal (T) is connected through a provider agent (PA) software component;
- supplying said access area data (AAD) obtained to a user agent (UA) software component where a user context associated with said access session is established and which contains information relative to terminal identity and terminal type;
- checking the subscription of said terminal, using said user context in a subscription management subsystem (SMS) for opening a service session or for participating in a previously opened service session; and
- admitting or rejecting a request for opening a service session or for participating in a previously opened service session in said terminal according to the result of the checking made in the preceding step.

2. A method, according to the preceding claim, characterised in that the access area data (AAD) contain information relative to connectivity provider identifiers (CPI) and network types and identifiers.

3. A method, according to any of the preceding claims, characterised in that the provider agent (PA) obtains the access area data (AAD) from a terminal controller (TC) software component incorporated in the terminal (T).

4. A method, according to any of the preceding claims, characterised in that the checking of the service subscription is done by means of a subscription agent (SubA) software component incorporated in the subscription management system.

5. A method, according to any of the preceding claims, characterised in that a fixed terminal establishes the access area in a process of terminal initialisation in which the required components are created in the terminal, and a mobile terminal updates the access area in the terminal each time the terminal is registered in the network, in the retailer domain (1), for the purpose of indicating that the terminal has been connected to the network.

6. A method, according to claim 1, characterised in that a service profile (SP) in the subscription management contains an access areas data list (AADL) of permitted or available areas for a given service which is used for checking subscription to said service.

7. A method, according to claim 6, characterised in that in the service profile (SP) for terminal mobility, it is checked as to whether the access area data (AAD) are in compliance with the access areas data list (AADL) of permitted or available areas for the terminal mobility service, thus admitting or rejecting terminal registration according to the result of said checking.

8. A method, according to any of the preceding claims, characterised in that a terminal (T) is connected to one or several access areas (AA) belonging to one or several networks (N) of one or several connectivity providers (3).

9. A method, according to any of the preceding claims, characterised in that once the user context has been established, the user agent (UA) knows the access area (AA) in which the terminal (T) is connected in said access session.

10. A method, according to any of the preceding claims, characterised in that the service profiles (SP) correspond to service templates (ST) of the services provided by a retailer (1).

11. Computer program comprising computer program code means adapted to perform all the steps of claim 1 when said program is run on a computer.

12. A computer readable medium having a program recorded thereon, said computer readable medium comprising computer program code means adapted to perform all the steps of claim 1 when said program is run on a computer.
